# EUROPEAN PATENT APPLICATION

(11) **EP 2 703 764 A2**
(43) Date of publication of application: **05.03.2014**
(21) Application number: 13182388.2
(22) Date of filing: 30.08.2013
(51) Int. Cl.: F28D 20/02, F03G 6/00

(54) **Thermal storage system and power generation system including the same**

(30) Priority: 31.08.2012 JP 2012192238
(71) Applicant: Hitachi Ltd., Tokyo 100-8280 (JP)
(72) Inventor: Takahashi, Fumio, Tokyo, 100-8280 (JP); Koyama, Kazuhito, Tokyo, 100-8280 (JP); Hatamiya, Shigeo, Tokyo, 100-8280 (JP); Kusumi, Naohiro, Tokyo, 100-8280 (JP); Sekiai, Takaaki, Tokyo, 100-8280 (JP)
(74) Representative: MERH-IP Matias Erny Reichl Hoffmann

(57) **Abstract**

A thermal storage system 1 includes: heat transfer medium that absorbs the solar thermal energy; phase-change material 10a6 that is heat exchanged with the heat transfer medium; and first thermal storage tanks (stratified tanks 10a-10c) in which the phase-change material 10a6 is supported and through which the heat transfer medium flows, wherein a plurality of the first thermal storage tanks (stratified tanks 10a-10c) are present, and the first thermal storage tanks (stratified tanks 10a-10c) are connected in parallel for the heat transfer medium flowing through, when storing the solar thermal energy, while the first thermal storage tanks (stratified tanks 10a-10c) are connected in series for the heat transfer medium flowing through, when exploiting the stored solar thermal energy. The thermal storage system is capable of exploiting the solar thermal energy more efficiently than conventional ones, while considering a variation in the amount of solar thermal energy.

## Description

### FIELD OF THE INVENTION

The present invention relates to a thermal storage system and a power generation system including the same.

### DESCRIPTION OF RELATED ART

In recent years, countermeasures against depletion of earth resources, environmental destruction, or the like have become major issues. Therefore, it is required to construct a zero-emission society with renewable energies. In order to solve these problems, those promoted for active exploitation are natural energies such as wind power and the sunlight, for example, and energies that exist in nature but have not been exploited yet.

In view of these circumstances, the energy contained in the sunlight (solar energy such as solar thermal energy) is attempted for exploitation. Specifically, Patent Document 1, for example, discloses a hybrid power generation system with the solar thermal energy and fuel combustion. In addition, Patent Document 2 discloses a thermal storage device using the solar thermal energy and a hot water supply system including the same.

### Prior Art Literature

PATENT DOCUMENT:
1. Japanese Patent Application Publication (Translation of PCT Application) No. 2000-514149 A
2. Japanese Patent Application Publication No. H08-094190 A

### Problems to be solved by the Invention

Time of day when the sunlight is radiated is limited to the daytime. Even during the daytime, the sunlight is sometimes blocked by clouds or the like. Thus, amount of obtainable solar thermal energy varies, depending on conditions such as time of day. However, in the technique described in Patent Document 1, such a variation in the amount of solar thermal energy is not considered, therefore it is impossible to exploit the solar thermal energy in a stable manner.

Further, in the technique described in Patent Document 2, the solar thermal energy is exploited by making the solar thermal energy absorbed in heat transfer medium (e.g., water). However, such heat transfer medium normally has a small heat capacity. Accordingly, in the technique described in Patent Document 2, the solar thermal energy is not fully exploited yet.

### BRIEF SUMMARY OF THE INVENTION

The present invention has been made in view of the aforesaid problems, intended to provide a thermal storage system that is capable of exploiting the solar thermal energy more efficiently than ever, considering a variation in the amount of solar thermal energy.

As a result of intensive studies in order to solve the aforesaid problems, the present inventors have found that the aforesaid problems can be solved by changing the connection form of thermal storage means between a thermal storage period and a thermal radiation period, and have completed the present invention.

### Effects of the Invention

According to the present invention, a thermal storage system will be provided, which is capable of exploiting the solar thermal energy more efficiently than conventional ones, while considering the variation in the amount of solar thermal energy.

### BRIEF DESCRIPTION OF THE DRAWINGS

FIG. 1 is a diagram illustrating a thermal storage system according to a first embodiment.
FIG. 2 is a diagram showing the inside of a stratified tank provided in the thermal storage system according to the first embodiment.
FIG. 3 is a graph showing a relationship of energy relative to time of day.
FIG. 4A is a figure showing the flow direction of the heat transfer medium during a thermal storage period, in the thermal storage system according to the first embodiment. FIG. 4B is a figure showing the flow direction of the heat transfer medium during a thermal radiation period.
FIG. 5 is a graph showing the temperature change in the heat transfer medium, phase-change material, and generated steam in the first embodiment.
FIG. 6 is a diagram illustrating a thermal storage system according to a second embodiment.
FIG. 7A is a diagram showing the flow direction of the heat transfer medium during the thermal storage period, in the thermal storage system according to the second embodiment. FIG. 7B is a diagram showing the flow direction of the heat transfer medium during the thermal radiation period.
FIG. 8A is a diagram showing the flow direction of the heat transfer medium during the thermal storage period, in the thermal storage system according to a third embodiment. FIGS. 8B-8D are diagrams showing the flow direction of the heat transfer medium during the thermal radiation period.
FIG. 9 is a diagram illustrating a thermal storage system according to a fourth embodiment.
FIG. 10 is a graph showing the temperature change in the heat transfer medium, the phase-change material, and the generated steam in the fourth embodiment.
FIG. 11 is a diagram illustrating a thermal storage system according to a fifth embodiment.
FIG. 12 is a graph showing the temperature change in the heat transfer medium, the phase-change material, and the generated steam in the fifth embodiment.
FIG. 13 is a diagram showing a modification of the stratified tank provided in the thermal storage systems according to the present embodiments.

### DETAILED DESCRIPTION OF PREFERRED EMBODIMENTS

Hereinafter, description will be given of individual embodiments for implementation, with reference to the drawings as appropriate. For convenience of description, each size of means in the drawings is enlarged or shrunk as appropriate, without departing from the scope and spirit of the present invention.

### First Embodiment

A thermal storage system of the present embodiment is used for storing the solar thermal energy. The thermal storage system according to the present embodiment can be provided in a power generation system as appropriate. Then, the present embodiment will be described first in an integrated solar combined cycle power generation system as a specific example of a power generation system. An integrated solar combined cycle power generation system includes a turbine (gas turbine) and a steam turbine, for generating power therewith.

### <Configuration>

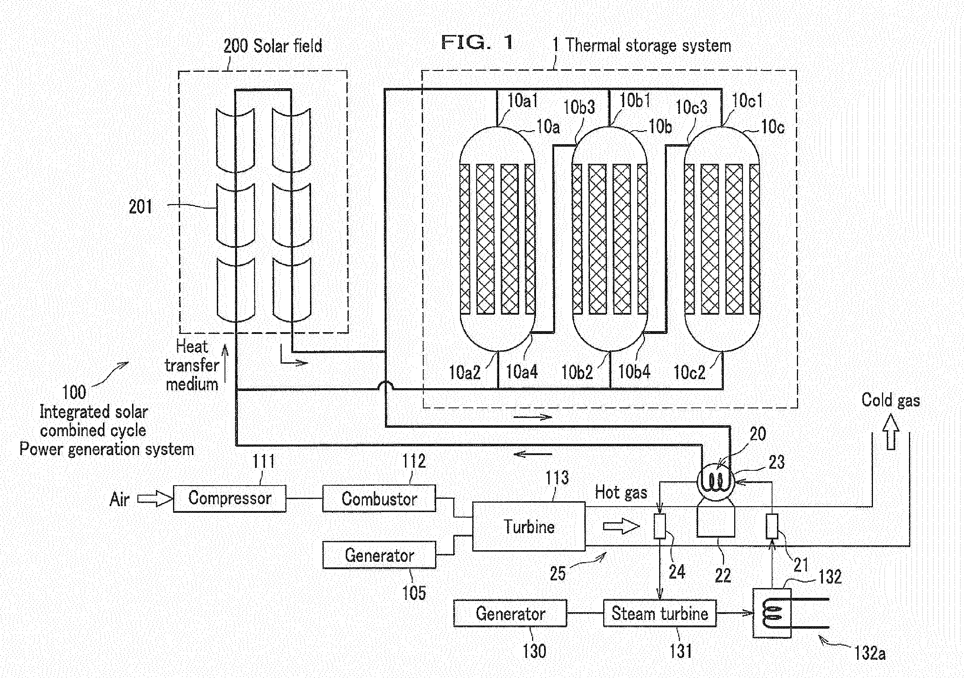

As shown in FIG. 1, a power generation system according to the first embodiment includes a thermal storage system 1, and an integrated solar combined cycle power generation system 100 (hereinafter referred to simply as "power generating system 100") to which the thermal storage system 1 is applied. Heat transfer medium is circulated between the thermal storage system 1 and the power generation system 100, through a pipe (not shown). Bold lines in FIG. 1 show a flow of the heat transfer medium.

Specifically, the heat transfer medium heated by the sunlight in a solar field 200 of the power generation system 100 is supplied to the power generation system 100. The heat in the supplied heat transfer medium is adapted to be exploited in the power generation system 100. On the other hand, some of the heat transfer medium heated in the solar field 200 is supplied to the thermal storage system 1. That is, excess heat which cannot be exploited in the power generation system 100 is adapted for storing heat in the thermal storage system 1.

It should be noted that liquid feed pumps, flow path control means, and the like are provided as appropriate, although not shown in the drawings for simplicity, wherein the liquid feed pumps transport the heat transfer medium, and the flow path control means (e.g., an electromagnetic valve, a three-way valve, a four-way valve, or the like) control the flow direction of the heat transfer medium.

Further, heat stored in the thermal storage system 1 in this manner is adapted to be exploited in the power generation system 100, for example, when there is no sunlight. That is, the heat stored in the thermal storage system 1 is used (released, specifically) at a solar thermal radiation portion 20 of the brackish water separation drum 23, for vaporizing water (i.e., generating steam), details thereof will be described later.

### THERMAL STORAGE SYSTEM 1:

The thermal storage system 1 includes a plurality of stratified tanks 10a, 10b, and 10c (10a-10c). In the present embodiment, stratified tanks 10a-10c are basically all the same. Note that FIG. 1 visualizes inside of the stratified tanks 10a-10c. In addition, the stratified tanks 10a-10c are provided with electric heaters, thermal insulation jackets (both not shown) or the like so as not to lower the inside temperature excessively.

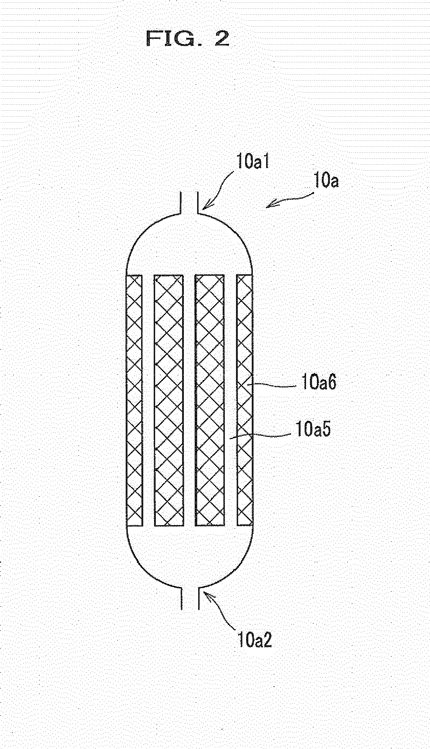

FIG. 2 shows a state in which inside of the stratified tank 10a is enlarged. Note that a connection port 10a4 for an external tube is not shown in FIG. 2, for simplicity of illustration. As shown in FIG. 2, the stratified tank 10a is constituted with three tubes 10a5 through which heat transfer medium flows, and phase-change material 10a6 that surrounds the periphery of the tubes 10a5. The phase-change material 10a6 is fixed inside of the stratified tank 10a. Then, the heat transfer medium flowing in from the connection port 10a1 for the external tube is adapted to flow through the tubes 10a5, then to be discharged to the outside through a connection port 10a2 and a connection port 10a4 (not shown in FIG. 2, see FIG. 1). Therefore, the stratified tank 10a (first thermal storage tank) is adapted to support the phase-change material 10a6, and the heat transfer medium flows through the tubes 10a5.

Here, a description will be given of the heat transfer medium and the phase-change material used in the thermal storage system 1. As described above, the solar field 200 receives the sunlight, which causes the heat transfer medium to absorb solar thermal energy. Then, the heat is adapted to be exploited in the power generation system 100 (specifically, the solar thermal radiation portion 20, to be described later).

The heat transfer medium is oil, which is used in the present embodiment. As the oil used in the present embodiment has a higher boiling point than water, the oil can absorb more solar thermal energy than a case using water, for example, as the heat transfer medium. Therefore, the power generation system 100 can be operated at a lower pressure as compared with the case using water, for example, as the heat transfer medium.

On the other hand, the phase-change material is intended to receive heat, which the heat transfer medium absorbs in the solar field 200, in the stratified tanks 10a-10c. That is, the phase-change material is adapted to be heat-exchanged with the heat transfer medium. By receiving the heat, the phase-change material changes phase from solid to liquid (phase transition). That is, when flowing through the tubes 10a5 in the stratified tank 10a, for example, the heat transfer medium is adapted to contact with the phase-change material through the tube wall. During this time, the heat carried by the heat transfer medium is adapted to be transferred to the phase-change material (thermal storage).

Conversely, when the phase-change material in a liquid state contacts the heat transfer medium carrying no heat, the heat transfer medium draws heat from the phase-change material (i.e., heat-exchanged with the phase-change material), and is discharged, for example, from the stratified tank 10a (heat radiation). Thus, the phase-change material is adapted to change to a solid state from a liquid state. Then, the heat transfer medium carrying heat is discharged from the stratified tank 10a, and pumped to the solar thermal radiation portion 20 for exploiting the carrying heat.

The phase-change material used in the present embodiment is lithium nitrate. By using lithium nitrate as the phase-change material, the thermal storage system 1 is operable at a temperature relatively easy to control.

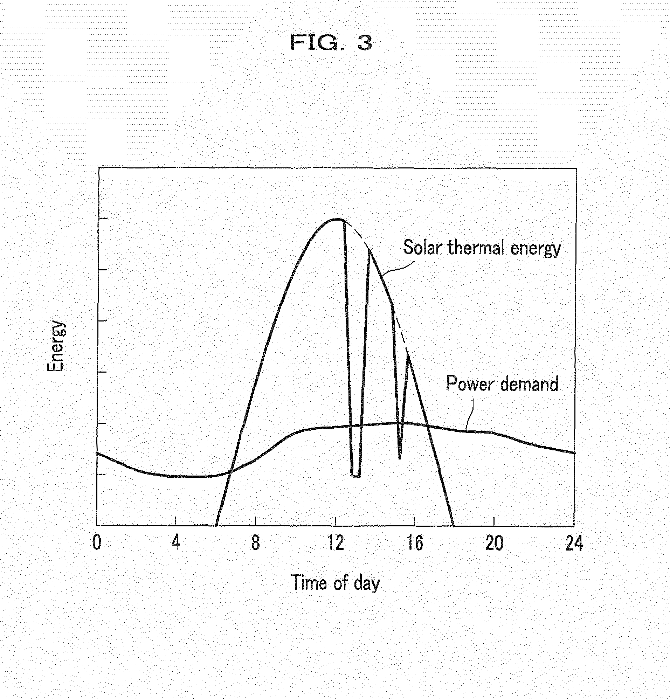

The phase-change material is used in the thermal storage system 1. Therefore, the amount of storable heat is greater as compared with a thermal storage and radiation system using only conventional heat transfer medium. Then, it is capable of storing the large amount of heat during a period when the sunlight is particularly strong, for example, at around 12:00 (see FIG. 3). By storing the large amount of heat, the solar thermal energy can be stably exploited, even during a period when the sunlight is unavailable, such as nighttime.

In addition, the phase-change material in a liquid state moves upward in the stratified tanks 10a-10c when the temperature becomes high, because the specific gravity decreases, and moves downward when the temperature becomes low, because the specific gravity increases. That is, the phase-change material in a liquid state has a higher temperature at the upper portion of the stratified tanks 10a-10c, and a lower temperature at the lower portion. Therefore, when storing heat, the heat transfer medium having a high temperature is adapted to be supplied from the upper portion of the stratified tanks 10a-10c downward. On the other hand, when radiating heat, the heat transfer medium having a low temperature is adapted to be supplied from the lower portion of the stratified tanks 10a-10c upward. By controlling the flow direction of the heat transfer medium in this way, it is possible to suppress unnecessary heat exchange and reduce heat loss.

As shown in FIG. 1, the stratified tanks 10a-10c are connected in parallel with the solar field 200, via pipes. In addition, pipes for series-connecting the stratified tanks 10a-10c are also provided in the present embodiment. More specifically, those pipes are provided for connecting the connection port 10a4 at the lower portion of the stratified tank 10a and a connection port 10b3 at the upper portion of the stratified tank 10b, and a connection port 10b4 at the lower portion of the stratified tank 10b and a connection port 10c3 at the upper portion of the stratified tank 10c. Description will be given later of the behavior of the heat transfer medium flowing through these pipes.

### POWER GENERATION SYSTEM 100:

As shown in FIG. 1, the power generation system 100 includes a generator 105, a compressor 111, a combustor 112, a turbine (gas turbine) 113, a generator 130, a steam turbine 131, a condenser 132 , an economizer 21, a steam generator 22, a brackish water separation drum 23, a superheater 24, and a solar field 200. Two power generation systems are operated in the power generation system 100.

A first power generation system mainly involves the generator 105, the compressor 111, the combustor 112, and the turbine 113. The turbine 113 is connected with the generator 105, the compressor 111, and the combustor 112. In other words, the first power generation system is a "gas turbine power generation." While describing the function of each unit, the operation of each unit will be described below when generating power.

First, air is taken into the compressor 111. Then, the taken air is compressed in the compressor 111, causing the temperature to rise. The air having a raised temperature is supplied to the combustor 112. Then, in the combustor 112, the fuel gas (not shown) is burnt together with the supplied air, causing a high temperature gas (hot gas) to be supplied to the turbine 113. The turbine 113 is rotated by the hot gas. At this time the gas supplied to the turbine 113 is expanded adiabatically. As described above, the turbine 113 is connected to the generator 105. Thus, power generation by the generator 105 is operated by transmitting a rotational force of the turbine 113 to the generator 105.

Meanwhile, the hot gas passing through the turbine 113 is discharged to the waste heat recovery boiler 25. Then, after contacting and having heat drawn by the superheater 24, the steam generator 22, and the economizer 21 (giving heat to each of these means), in this order, the hot gas is discharged to the outside as cold gas. In this way, the first power generation system (gas turbine power generation) is operated.

Next, a description will be given of a second power generation system. The second power generation system mainly involves the solar thermal radiation portion 20, the economizer 21, the steam generator 22, the brackish water separation drum 23, the superheater 24, the generator 130, the steam turbine 131, and the condenser 132. While describing the function of each unit, the operation of each unit will be described below when generating power.

It should be noted that water (liquid water or steam) is circulated through a flow path configured with the condenser 132, the economizer 21, the brackish water separation drum 23, the superheater 24, and the steam turbine 131. For a description of the second power generation system, the behavior of the water will be described from the condenser 132, via the brackish water separation drum 23, back to the condenser 132.

The condenser 132 is equipped with a cooling tube 132a. Thus, steam supplied from the steam turbine 131 is cooled by the cooling pipe 132a, to be changed to water in a liquid state (i.e., condensed). Then, water in the liquid state is heated (preheated) in the economizer 21, by the heat of the gas discharged from the turbine 113. Note that this heating is performed with the gas after its heat is drawn by the superheater 24 and others. Thus, the water does not evaporate by this heating. Therefore, the water discharged from the economizer 21 has a high temperature, yet is in a liquid state.

Next, the heated water is supplied to the steam generator 22 and the brackish water separation drum 23. In the steam generator 22, the heat is provided by the hot gas discharged from the turbine 113. Further, in the solar heat radiation portion 20 (provided in the liquid reservoir of the brackish water separation drum 23), the solar thermal energy is radiated. Therefore, the water supplied to the steam generator 22 and the brackish water separation drum 23 is heated with the solar thermal energy from the solar thermal radiation portion 20, and the heat received from the hot gas discharged from the turbine 113. Thus, by using the solar thermal energy for heating the water, more steam can be generated. Therefore, the amount of the generated power can be increased.

The steam produced by heating water is superheated further by the superheater 24. The superheater 24 is the first one that is contacted with the hot gas discharged from the gas turbine 113. Therefore, in the superheater 24, steam is superheated particularly with large amount of heat. Then, the steam discharged from the superheater 24 (superheated steam) is supplied to the steam turbine 131. And this steam rotates the steam turbine 131. Thus, the generator 130 connected to the steam turbine 131 is adapted to generate electricity. Finally, the steam which has passed through the steam turbine 131 is returned to the aforesaid condenser 132. The returned water is adapted to be used for power generation again. In this way, the second power generation system (steam turbine power generation) is operated.

The solar field 200 provided in the power generation system 100 includes a plurality of collectors 201. A collector 201 has a semi-cylindrical shape. The inside of the collector 201 is a mirror surface. A pipe through which the heat transfer medium flows is provided inside of the semi-cylindrical collector 201. After being reflected on the inner surface of the collector 201, the sunlight is to be radiated to the pipe through which the heat transfer medium flows. Thus, the heat transfer medium flowing through the pipe is to be heated. The heated heat transfer medium is adapted to be supplied to the solar thermal radiation portion 20.

### <Operation and Effect>

Next, a description will be given of thermal storage and radiation of the sunlight absorbed by the heat transfer medium in the thermal storage system 1. Note that a control such as the flow channel switching of the heat transfer medium in the thermal storage system 1 is performed by a CPU (Central Processing Unit) (not shown) controlling the liquid feed pumps, the flow path switching means, and the like. In addition, a program that performs the aforesaid control is stored in advance, in a ROM (Read Only Memory), an HDD (Hard Disk Drive), or the like, which is/are not shown.

As shown in FIG. 3, the power demand is, even with some changes throughout the day, relatively constant compared to the change in the sunlight. More specifically, the solar energy is obtained only during the sun rises. That is, the solar energy cannot be obtained from the sun at night (approximately from 6 p.m. to 6 a.m.). Further, even during daytime (approximately from 6 a.m. to 6 p.m.), the sunlight can be blocked by clouds or the like, causing the obtained solar thermal energy reduced (at around 1 p.m. and 4 p.m. in the graph). In addition, there is also a time, for example, at around noon, when particularly large solar energy is obtainable.

Therefore, considering such large variation of the solar thermal energy, it is desirable to stably supply the solar thermal energy to the demand end. In view of this, the present invention has been recalled. Specifically, in the present embodiment, the solar thermal energy is fully stored during daytime when the sunlight radiates. Then, during night or when the sunlight is interrupted, the heat stored in advance is adapted to be used (radiated). With such a control, the solar thermal energy can be stably supplied to the demand end. In order to perform such a control, the stratified tanks 10a-10c are provided and adapted to be connected in different forms during the thermal storage period and the thermal radiation period.

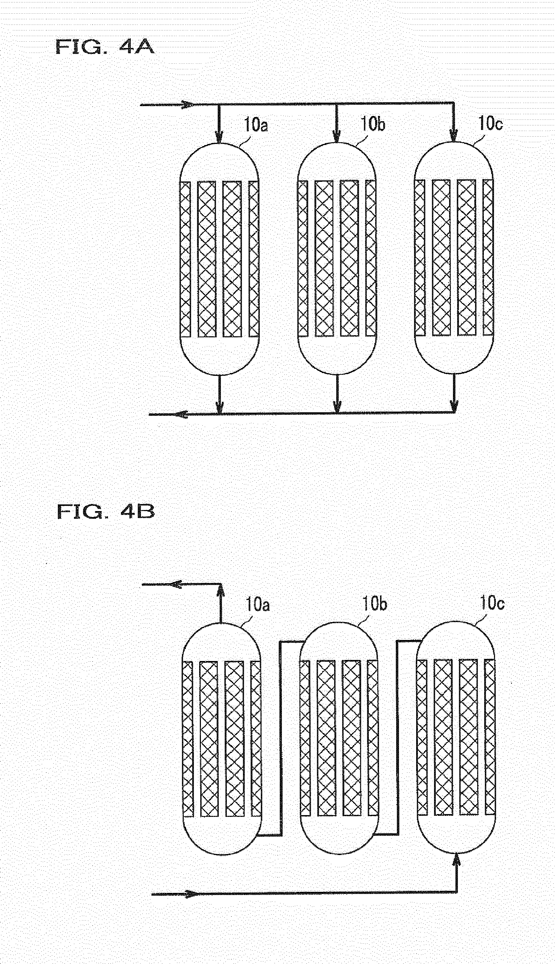

FIG. 4A shows the connection form of the stratified tanks 10a-10c during the thermal storage period, and FIG. 4B shows the connection form of the stratified tanks 10a-10c during the thermal radiation period. That is, as shown in FIGS. 4A and 4B, the stratified tanks 10a-10c are adapted to be connected in parallel for the heat transfer medium to flow through during the thermal storage period of the solar thermal energy, and the stratified tanks 10a-10c are adapted to be connected in series for the heat transfer medium to flow through when exploiting the stored solar thermal energy.

Therefore, when the sunlight is obtained, such as during daytime, the solar thermal energy is absorbed by the heat transfer medium in the solar field 200. Then, the heat transfer medium that has absorbed heat is supplied to the solar thermal radiation portion 20 and the thermal storage system 1. During this time (i.e., thermal storage period), the stratified tanks 10a-10c are connected in parallel as shown in FIG. 4A. Then, the heat transfer medium, which has radiated heat in the solar thermal radiation portion 20 to be cooled, is adapted to be returned to the solar field 200.

On the other hand, when the sunlight is unavailable, such as at night, the solar thermal energy is not absorbed by the heat transfer medium in the solar field 200. Therefore, the heat stored in the thermal storage system 1 during the thermal storage period is released in the solar thermal radiation portion 20. During this time (i.e., thermal radiation period), the stratified tanks 10a-10c are connected in series as shown in FIG. 4B. Thus, a connection form of the stratified tanks (serial or parallel) is different between the thermal storage period and the thermal radiation period.

When storing large amount of heat, if the stratified tanks 10a-10c are connected in series, it takes a long time for the heat transfer medium to pass through all the stratified tanks 10a-10c. Therefore, it is impossible to store large amount of heat in a short time. More specifically, during a period of noon to 1 p.m., for example, when the sunlight is strong, it is preferable that the heat transfer medium is to be circulated as much as possible, for absorbing the solar thermal energy in the solar field 200. However, if the flow rate of the heat transfer medium is simply increased for circulating the heat transfer medium as much as possible, it may cause an excessive load applied to the liquid pumps or unexpected cavitation bubbles to occur inside the pipes and the tubes.

So, during the thermal storage period, the stratified tanks 10a-10c are connected in parallel. Thus, even in the same flow rate as that in a case of a series connection, more heat transfer medium can be circulated (triple amount in the illustrated example). This enables to absorb large amount of heat efficiently, during a limited solar radiation time.

On the other hand, during the thermal radiation period, when the heat transfer medium having a low temperature is supplied to the stratified tanks 10a-10c, the heat is transferred from the phase-change material in the stratified tanks 10a-10c to the heat transfer medium flowing therethrough. As a result, the heat is drawn from the phase-change material in a liquid state, causing the phase-change material to start coagulation.

The coagulation is a phenomenon that occurs particularly in the phase-change material adjacent to the tubes. As described above, the heat is exchanged through the pipes between the heat transfer medium and the phase-change material. Thus, the heat is transferred primarily from the phase-change material adjacent to the pipes to the heat transfer medium flowing therethrough. Thus, the coagulation begins with the phase-change material adjacent to the pipes.

A heat transfer rate is sometimes reduced, when the phase-change material is coagulated adjacent to the pipes. In other words, the phase-change material in a solid state exists much in the vicinity of the pipes. Therefore, it becomes sometimes difficult to heat exchange between the phase-change material in outer side, still in a liquid state, and the heat transfer medium. In addition, as convection of the phase-change material in a liquid state is also less likely to occur, the heat transfer rate is further reduced. Then, there is an idea to reduce a flow rate of the heat transfer medium during the thermal radiation period. However, the heat transfer rate tends to decrease in proportion to 1/2 square of velocity. Thus, the heat transfer rate decreases in the tubes within the stratified tanks 10a-10c. Therefore, it is preferable to maintain a flow rate of the heat transfer medium to some extent.

In consideration of these circumstances, the stratified tanks 10a-10c are connected in series during the thermal radiation period in the thermal storage system 1. By doing this way, a duration of contacting time (heat exchanging time) can be prolonged between the heat transfer medium and all the phase-change material, without lowering the flow rate. Thus, even when the heat transfer rate decreases due to the aforesaid coagulation, the phase-change material can transfer sufficient heat to the heat transfer medium. Then, degradation in power generation efficiency can be suppressed in the power generation system 100.

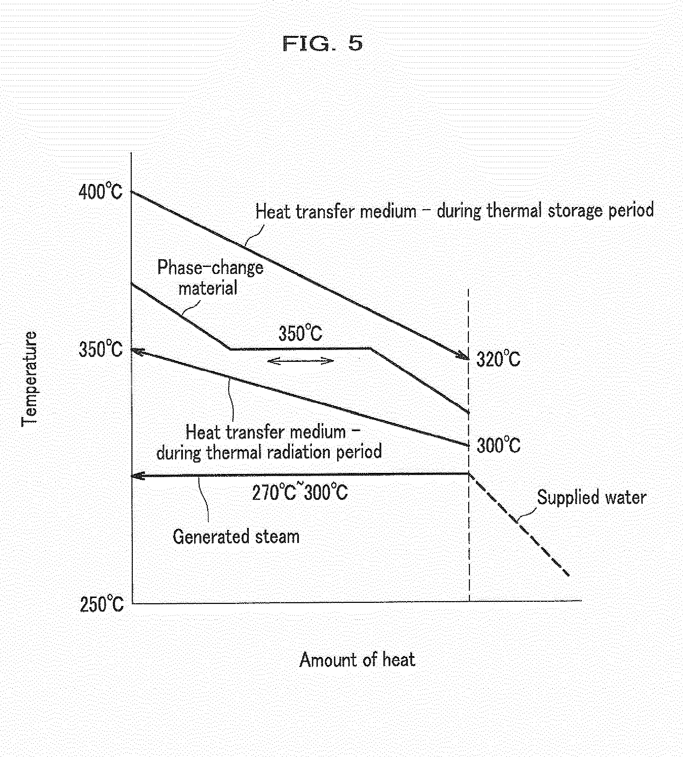

In a case when the thermal storage system 1 is applied to the power generation system 100, temperature changes will be shown in the heat transfer medium (during the thermal storage period and during the thermal radiation period), the phase-change material and the generated steam in FIG. 5. In the graph shown in FIG. 5, the horizontal axis represents the amount of heat exchanged, and the vertical axis represents the temperature. Further, lithium nitrate is used as the phase-change material.

As shown in FIG. 5, the heat transfer medium at 400 °C is supplied to the stratified tanks 10a-10c during the thermal storage period. Then, after being supplied to the stratified tanks 10a-10c, the heat transfer medium starts to supply the carrying heat to the phase-change material. Therefore, the temperature of the heat transfer medium gradually decreases, down to 320 °C at a discharging time. On the other hand, in the stratified tanks 10a-10c, the heat starts to be supplied to the phase-change material in a solid state, and the temperature gradually increases (proceeds to the left direction in the graph of the phase-change material). During this time, the temperature becomes constant at 350 °C on the way, since the phase change is occurring in the phase-change material. After the phase change is complete and the phase-change material fully becomes in a liquid state, the temperature rises again.

As shown in FIG. 5, the heat transfer medium at 300 °C is supplied to the stratified tanks during the thermal radiation period. Then, after being supplied to the stratified tanks 10a-10c, the heat transfer medium starts to draw heat from the phase-change medium. Therefore, the temperature of the heat transfer medium gradually increases, up to 350 °C at a discharging time. On the other hand, in the stratified tanks 10a-10c, the heat starts being drawn from the phase-change material in a liquid state, and the temperature gradually decreases (proceeds to the right direction in the graph of the phase-change material). During this time, the temperature becomes constant at 350 °C on the way, since the phase change is occurring in the phase-change material. After the phase change is complete and the phase-change material fully becomes in a solid state, the temperature decreases again.

Then, during the thermal storage period, steam is generated using the solar thermal energy absorbed in the solar field 200. In addition, during the thermal radiation period, steam is generated using the heat in the heat transfer medium discharged from the thermal storage system 1. Specifically, as shown in FIG. 5, supplied water (graph in a broken line in FIG. 5) is changed to steam when the temperature rises, becoming steam at 270 °C to 300 °C.

By configuring the thermal storage system 1 as described above, the solar thermal energy can be exploited more efficiently in the power generation system 100 than in a conventional system, considering the variation in the amount of solar thermal energy.

### Second Embodiment

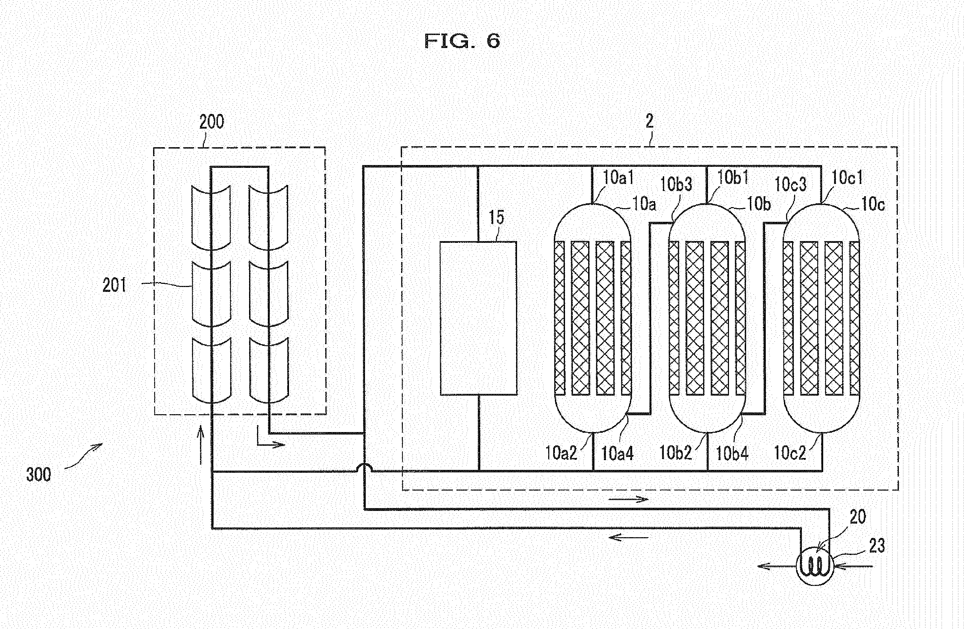

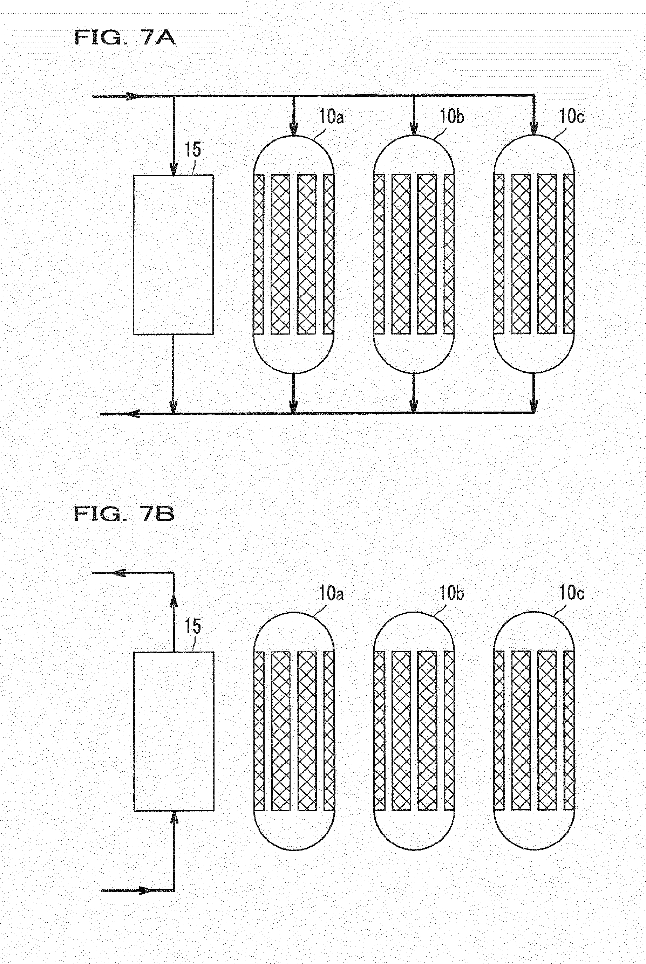

Next, description will be given of a thermal storage system according to the second embodiment (thermal storage system 2), with reference to FIGS. 6 and 7. Assuming that the same item as the first embodiment is denoted by the same reference numeral, and detailed description thereof will be omitted. In addition, the power generation system 300, in which the thermal storage system 2 shown in FIG. 6 is applied, has the same configuration as the power generation system 100 described above.

The thermal storage system 2 is provided with a stratified tank 15 that does not include phase-change material, in addition to the stratified tanks 10a-10c. That is, the stratified tank 15 (a second thermal storage tank) is intended for storing the heat transfer medium itself which has absorbed the solar thermal energy. The stratified tank 15 is connected in parallel to the solar field 200. Similarly, the stratified tank 15 is connected in parallel even to the stratified tanks 10a-10c. In addition, the stratified tank 15 is provided with electric heaters, thermal insulation jackets (both not shown) or the like, as well as the stratified tanks 10a-10c, so as not to lower the inside temperature excessively.

In the thermal storage system 1 described above, heat exchange is performed between the phase-change material and the heat transfer medium. From the viewpoint of better thermal responsiveness, the stratified tank 15 for storing the heat transfer medium is provided in the thermal storage system 2. That is, the heat storage system 2 is provided with the stratified tank 15 that stores the heat transfer medium, which has absorbed the solar thermal energy as it is.

Description will be given of an operation method using the thermal storage system 2. During the daytime, as shown in FIG. 7A, the stratified tanks 10a-10c, 15 are connected in parallel, for storing the heat individually. However, the stratified tank 15 is a tank for storing only the heat transfer medium as described above. Therefore, a predetermined amount of the heat transfer medium is stored in the stratified tank 15, while the hot heat transfer medium circulates.

During the thermal storage period, sufficient sunlight sometimes becomes unavailable suddenly due to clouds or the like. In such a case, as shown in FIG. 7B, supplying the heat transfer medium to the stratified tanks 10a-10c and 15 is stopped, and instead, the heat transfer medium stored in the stratified tank 15 is released to the outside thereof. That is, when the sufficient sunlight becomes unavailable suddenly, the heat transfer medium stored in the stratified tank 15 is supplied to the solar thermal radiation portion 20. As being supplied with the heat transfer medium at a high temperature until just before that time, the stratified tank 15 is capable of supplying the heat transfer medium at a high temperature, with very little decrease in temperature, to the solar thermal radiation portion 20. By doing this way, responsiveness will be improved. That is, when the sufficient sunlight is unavailable due to clouds or the like, the power generation system 300 can be prevented from being cooled. Thus, it is possible to suppress a decrease in the amount of generating power due to climate change.

By configuring the thermal storage system 2 as above, the power generation system 300 is capable of exploiting the solar thermal energy more efficiently than the conventional ones, considering a variation in the amount of solar thermal energy. Moreover, even with sudden changes in the weather, the solar thermal energy can be stably supplied to the power generation system 300.

### Third Embodiment

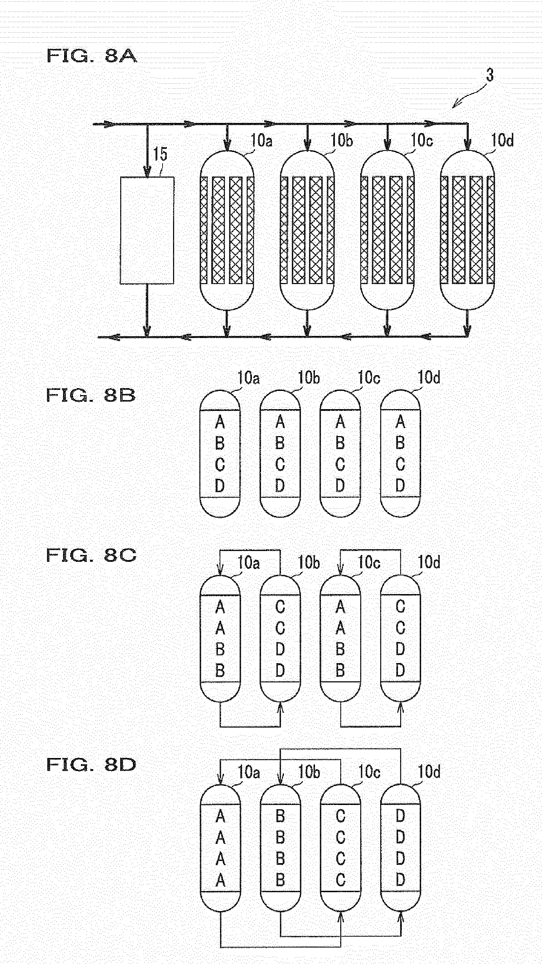

Next, description will be given of a thermal storage system (thermal storage system 3) according to a third embodiment, by referring to FIG. 8. In FIG. 8, the same items as the respective embodiments described above shall be denoted by the same reference numerals, and detailed descriptions thereof will be omitted.

In the thermal storage system 3, four stratified tanks 10a-10d and one stratified tank 15 are connected in parallel, as shown in FIG. 8A. Note that the stratified tank 10d is the same as the aforesaid stratified tanks 10a-10c. Then, during the thermal storage period, as is the case with the respective embodiments described above, the heat transfer medium flows through the stratified tanks 10a-10d, and 15, for storing the heat.

However, a predetermined control is performed after the thermal storage period but before the heat radiation is performed using the stratified tanks 10a-10d. In other words, while the emission of the heat transfer medium (use of the solar thermal energy) is being made by the stratified tank 15, temperature homogenization is performed of the phase-change material in the stratified tanks 10a-10d.

When the amount of solar radiation is small, the temperature is not sometimes homogenized of the phase-change material (in a liquid state) within the stratified tanks 10a-10d. That is, the amount of solar radiation is not enough for the homogenized temperature to increase, and unevenness occurs in the temperature of the phase-change material in the tank. In such a case, similar to the case described above, the phase-change material in a liquid state, having a high temperature, moves upward, while the phase-change material in a liquid state, having a low temperature, moves downward. Further, as described above, since the heat transfer medium having a high temperature is supplied from above, during the thermal storage period, the heat is not sometimes transmitted well enough to the phase-change material at a lower side.

Therefore, in the present embodiment, unevenness of the temperature within the same stratified tank is resolved during the thermal radiation from the stratified tank 15. After the unevenness of the temperature is resolved within each of the stratified tanks 10a-10d, these stratified tanks are connected in series for the thermal radiation.

FIGS. 8B-8D show a specific method of resolving unevenness of the temperature. In FIG. 8B, A represents a portion having the highest temperature of the phase-change material, so as B, C and D represent portions having a lower temperature than the previous one, in this order, respectively. That is, D is a portion having the lowest temperature of the phase-change material. Note that the temperature gradient between these portions normally does not have a clear boundary point of temperature. However, in FIGS. 8B-8D, a description will be given for simplification, assuming that there are four stages (steps) of temperature gradient.

In this state, at the beginning, the stratified tanks 10a and 10b are connected. In addition, the stratified tank 10c and 10d are connected. Then, as shown in FIG. 8C, circulating the heat transfer medium between the stratified tanks 10a and 10b causes a temperature in the stratified tank 10a to become higher overall, while a temperature in the stratified tank 10b to become lower overall. Similarly, circulating the heat transfer medium between the stratified tanks 10c and 10d causes a temperature in the stratified tank 10c to become higher overall, while a temperature in the stratified tank 10d to become lower overall.

Such phenomenon is caused by the fact that the heat transfer medium is discharged having a temperature of the phase-change material in the vicinity of the external pipe connection port through which the heat transfer medium is discharged from the stratified tanks 10a-10d. That is, for example, as shown in FIG. 8C, when the heat transfer medium flowing through the stratified tank 10a is discharged, the temperature of the phase-change material is C and D in the vicinity of the external pipe connection port. Therefore, the heat transfer medium having the temperature D is first supplied to the stratified tank 10b, and as a result, the temperature of the phase-change material in the stratified tank 10b becomes the same as the temperature D of the heat transfer medium supplied to the stratified tank 10b. Then, the heat medium having the temperature C is supplied to the stratified tank 10b, and as a result the temperature of the phase-change material in the stratified tank 10b becomes the same as the temperature C of the heat transfer medium supplied to the stratified tank 10b. This also applies to the other stratified tanks.

Next, the stratified tanks 10a and 10c are connected. In addition, the stratified tank 10b and 10d are connected. Then, as shown in FIG. 8D, circulating the heat transfer medium between the stratified tanks 10a and 10c causes a temperature in the stratified tank 10a to become homogenized at A, while a temperature in the stratified tank 10c to become homogenized at C. Similarly, circulating the heat transfer medium between the stratified tanks 10b and 10d causes a temperature in the stratified tank 10b to become homogenized at B, while a temperature in the stratified tank 10d to become homogenized at D.

Then, after homogenizing the temperature of the phase-change material in each of the stratified tanks 10a-10d in this manner, the thermal radiation by the stratified tank 15 is stopped and the thermal radiation by the stratified tanks 10a-10d is started. At this time, the stratified tanks 10a-10d are connected in series, and the heat transfer medium flows into the stratified tank 10d from the lower portion, then flows through the stratified tanks 10c and 10b, in this order, and is discharged from the upper portion of the stratified tank 10a at the end.

By doing this way, during the thermal radiation period, when flowing through the respective stratified tanks 10a-10d, the heat transfer medium can be circulated in the direction in which the temperature of the phase-change material gradually increases. That is, as described above, by circulating the heat transfer medium between the stratified tanks 10a-10d, the temperature can be controlled of the phase-change material in the stratified tanks 10a-10d. Specifically, the temperature in the stratified tank 10d is the lowest, into which the heat transfer medium first flows, then the temperature increases in the stratified tanks 10c and 10b, in this order, and the temperature will become the highest in the stratified tank 10a from which the heat transfer medium is finally discharged. By doing this way, the unnecessary heat exchange will be suppressed and heat loss will be reduced.

### Fourth Embodiment

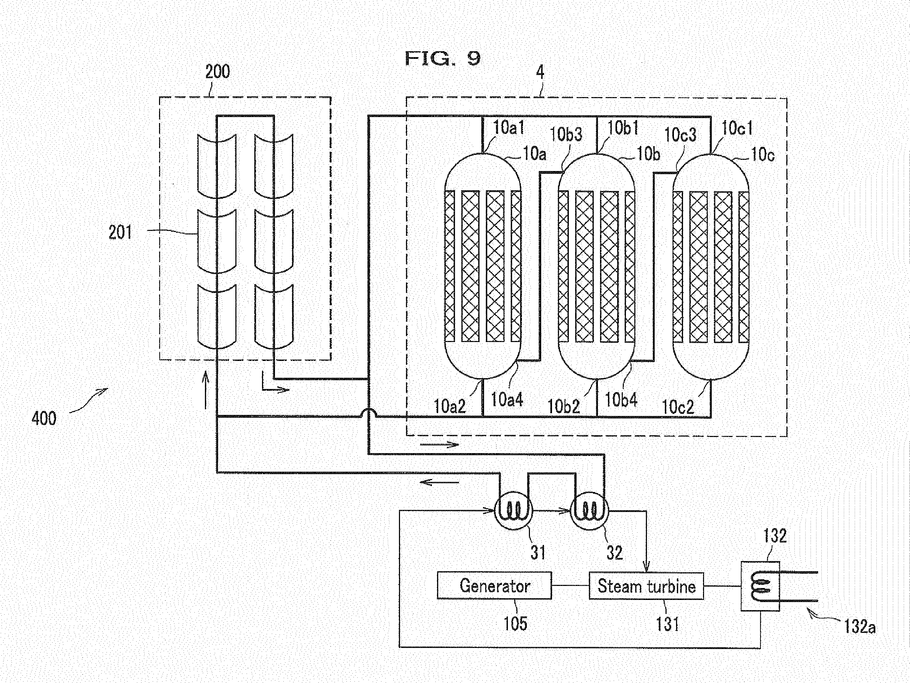

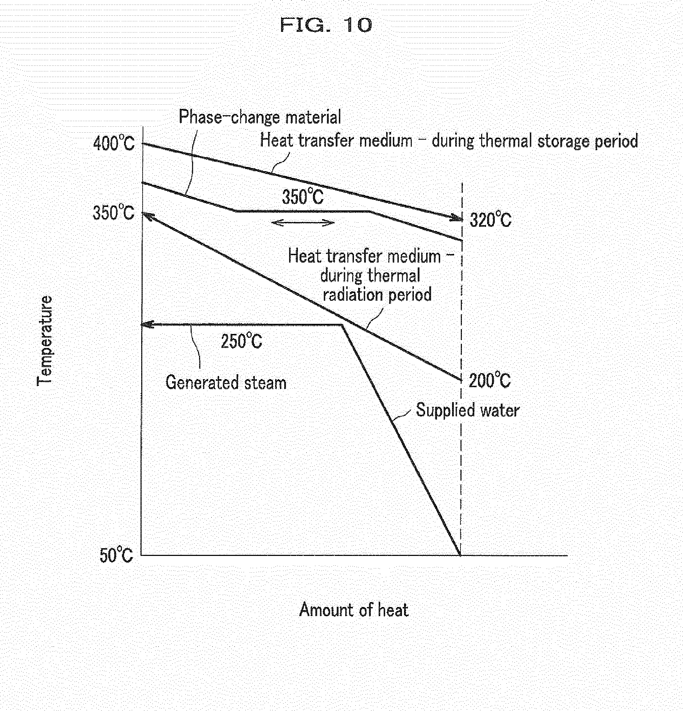

Next, a description will be given of a thermal storage system (thermal storage system 4) according to a fourth embodiment, by referring to FIGS. 9 and 10. In FIG. 9, the same items as the respective embodiments described above shall be denoted by the same reference numerals, and detailed descriptions thereof will be omitted.

The thermal storage system 4 is applied to a solar power generation system 400 (hereinafter referred to as "power generation system 400" as appropriate) as a power generation system. The power generation system 400 includes a solar thermal economizer 31, a solar steam generator 32, the generator 105, the steam turbine 131, and the condenser 132. Then, the solar thermal economizer 31, the solar steam generator 32, the steam turbine 131, and the condenser 132 are provided in the middle of the flow path through which the water (liquid water or steam) circulates.

In the power generation system 400, the water is evaporated using the solar thermal energy in the solar thermal economizer 31 and the solar steam generator 32. Thus, more solar thermal energy is used for the evaporation of water in the power generation system 400, which is performed in parallel during the thermal storage period. Therefore, the amount of stored heat is reduced. Accordingly, as shown in FIG. 10, the temperature of the heat transfer medium is lower compared to FIG. 5, when starting the thermal radiation.

However, as the temperature difference becomes larger between the temperature of the heat transfer medium and the temperature of the phase-change material, when starting the thermal radiation, it is possible to increase heat exchange efficiency. Therefore, it is possible to supply the solar thermal energy more efficiently to the solar thermal economizer 31 and the solar steam generator 32. Thus, steam will be generated more efficiently, which in turn enables more efficient power generation. Note that the graph in FIG. 10 is basically the same as the graph in FIG. 5 described above, then the detailed description thereof is omitted.

### Fifth Embodiment

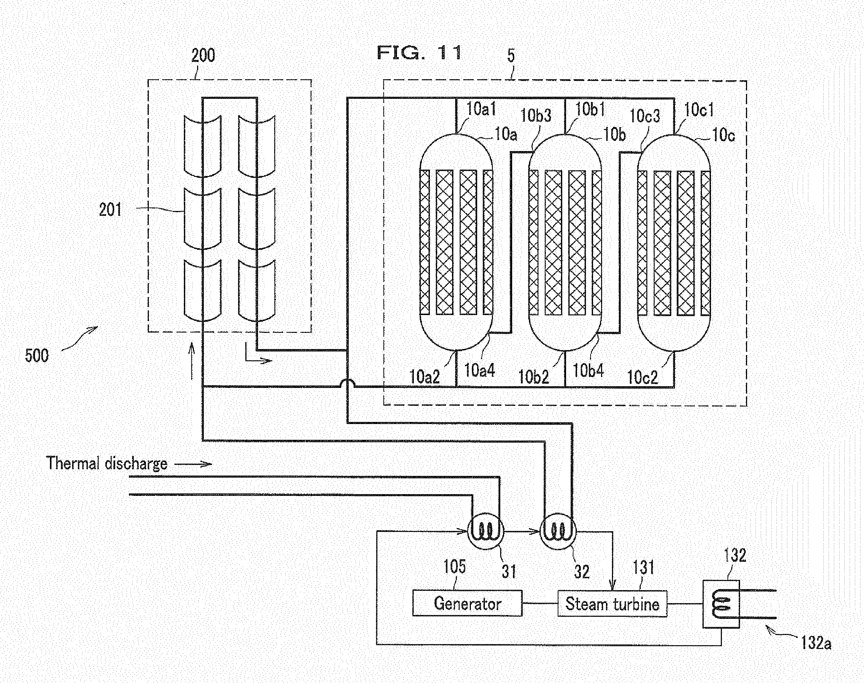

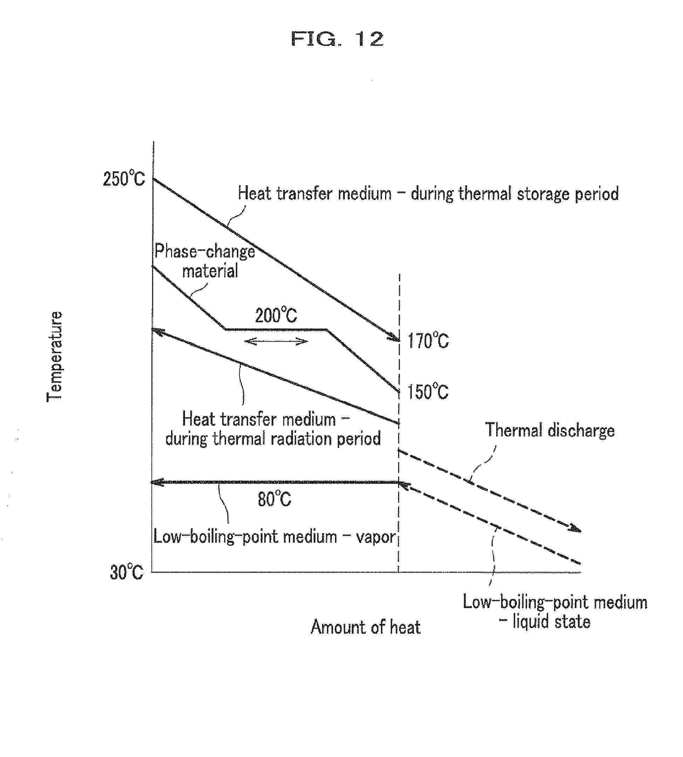

Next, a description will be given of a thermal storage system according to a fifth embodiment (thermal storage system 5), by referring to FIGS. 11 and 12. In FIG. 11, the same items as the respective embodiments described above shall be denoted by the same reference numerals, and detailed descriptions thereof will be omitted.

The thermal storage system 5 is applied to a binary power generation system 500 (hereinafter referred to as "power generation system 500" as appropriate) as a power generation system. In the power generation system 500, thermal discharge is used as a heat source in the solar thermal economizer 31. That is, evaporation of low-boiling-point medium component is performed in the solar thermal economizer 31, using the exhaust heat. In addition, water circulates in the case of the fourth embodiment, while the low-boiling-point medium component (component of the medium having a low boiling point: chlorofluorocarbon, ammonia, propane gas or the like, for example) circulates in the case of the fifth embodiment.

The temperature of the thermal discharge is about 100 °C at the highest. And, the specific heat of each of the thermal discharge and the low-boiling-point medium component is also substantially constant regardless of temperature. Therefore, vapor of the low-boiling-point medium component, which has a lower boiling point than water, can be generated using the thermal discharge. In particular, there is an advantage, as compared with the embodiments described above, that a heat resistance is not required so much of the thermal storage system 5, since the temperatures during the thermal storage period and during the thermal radiation period are generally low as shown in FIG. 12.

Note that the graph in FIG. 12 is basically the same as the graph in FIGS. 5 and 10 described above, then the detailed description thereof is omitted. However, it is adapted so that the heat in the thermal discharge is transferred to the low-boiling-point medium in a liquid state, and then the low-boiling-point medium (boiling point is 80 °C or less) in a liquid state changes to vapor of the low-boiling-point medium.

### Modifications

Hereinabove, the present embodiments have been described with reference to the drawings, and the present embodiments can be practiced with any modification within a range not departing from the gist of the present invention.

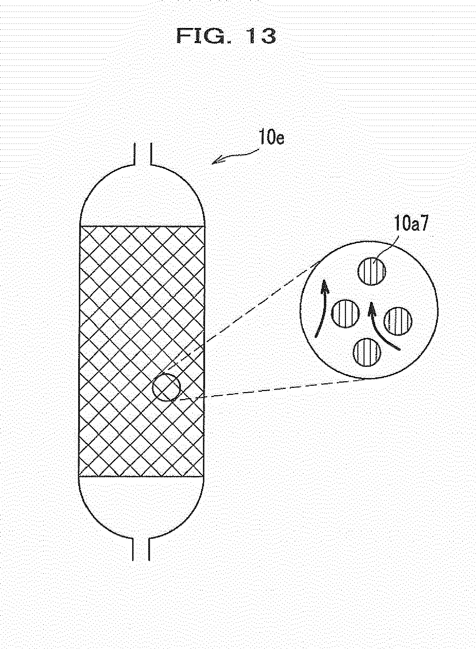

For example, a stratified tank 10e shown in FIG. 13 may be used as the stratified tank. The stratified tank 10e is filled with granular phase-change material 10a7, each coated with an outer shell (not shown). That is, the phase-change material 10a7 is coated and the coated phase-change material 10a7 is contained in the stratified tank 10e. In addition, the phase-change material 10a7 is adapted, with an outer shell, not to leak to the outside even in a liquid state. The heat transfer medium flows through the gap of the granular phase-change media 10a7. By configuring the phase-change material in this way, it is possible to further reduce the possibility of degradation in heat transfer efficiency described above. Further, as the heat transfer medium flows freely around the phase-change material 10a7, the temperature gradient of the phase-change material becomes more clear in the stratified tank, when the temperature of the flowing-in heat transfer medium changes and causes stratification of the phase-change material. Therefore, it becomes easier to resolve unevenness of the temperature described above with reference to FIG. 8.

In each of the embodiments, the number of stratified tanks having phase-change material is not limited to the number shown in the figure, but the number may be two, four or more. In particular, the circulation of the heat transfer medium in the stratified tanks described above is not limited to the example with four tanks, and the number of tanks may be two, three, five or more. That is, the number of stratified tanks may be even or odd. If an odd number of stratified tanks are provided, the heat transfer medium may be circulated between the stratified tanks, by changing the combination of the stratified tanks for circulation appropriately. However, from the viewpoint of an easy control and circulation in a short time, the number of stratified tanks is preferably 2ⁿ (where "n" is an integer of 1 or more).

All the stratified tanks may not be operated during the operation of the thermal storage system, that is, by including a stratified tank as a backup that is not used during normal operation, the backup stratified tank may be used, for example, in an emergency case when one of the stratified tanks fails, or the like.

In each of the aforesaid embodiments, all the stratified tanks 10a-10d are assumed to have the same specification, but the specifications of the stratified tanks need not be all the same and some may have different specifications from others. More specifically, the stratified tanks shown in FIG. 2 and the stratified tanks shown in FIG. 13 can be used in combination, for example.

The circulation of the heat transfer medium between the stratified tanks described with reference to FIG. 8 may be appropriately determined according to the number of stratified tanks provided. In addition, a temperature gradient is said to have 4 stages in FIG. 8 for convenience of description, but a temperature gradient can also have 3 stages or less, or 5 stages or more. Therefore, the number of circulation times may be set appropriately in association with the stages of the temperature gradient.

In the illustrated examples, the stratified tanks are provided one by one independently, but each thereof can be a stratified tank group consisting of multiple stratified tanks, for example, and the said stratified tank groups are connected in parallel during the thermal storage period, while they are connected in series during the thermal radiation period. Such a configuration should be able to obtain similar effects as the present invention.

Specific types of the heat transfer medium and the phase-change material are not limited to the examples described above. Therefore, it is possible to use other than water as the heat transfer medium and other than lithium nitrate as the phase-change material arbitrarily. When using components other than these, numerical values in the graph shown in FIG. 5, for example, may be changed, but even in such a case the present embodiments are similarly applicable.

The numerical values and graphical shapes shown in FIGS. 5, 9 and 12 are examples and intended to vary with operating conditions. Thus, the numerical values and graphical shapes can be determined, for example, with the location of the power generation system and the thermal storage system, the operation period of time. This determination is made, for example, by a test run.

Each thermal storage system of the present embodiments is provided particularly suitable for the specific power generation system as described above. However, the configuration of the power generation system is not limited to the illustrated exemplary cases and any other power generation systems should be able to apply such a thermal storage system, as far as the power generation system generates electricity using the heat absorbed in the heat transfer medium. Specifically, as far as liquid material (such as water and low-boiling-point medium component) is heated to generate gaseous material (such as steam and vapor of the low-boiling-point medium component) using the solar thermal energy absorbed in the heat transfer medium and power generation is performed therewith, any power generation system should be able to apply such a thermal storage system. Additionally, the thermal storage systems of the present embodiments are also applicable to any systems other than power generation systems, which can exploit the solar thermal energy. More specifically, the heat in the thermal storage system can be applied, for example, to a hot-water supply system.

Arrangement of the stratified tanks is not at all limited to the illustrated embodiment, and the stratified tanks may be arranged, for example, so that the heat transfer medium flows through in a direction perpendicular to the direction shown above (i.e., lateral direction on the page).

Connection forms between the stratified tanks are neither limited to the illustrated examples, and any connection forms should be applicable, as far as the stratified tanks are connected in parallel during the thermal storage period and connected in series during the thermal radiation period for the heat transfer medium to flow through. In addition, the flowing direction of the heat transfer medium is not limited to the illustrated examples, and the heat transfer medium may flow in the opposite direction as the direction above. Further, the flow rate of the heat transfer medium is also set to any, and may be appropriately determined depending on various conditions such as the thickness of the pipe and tube, and the cubic capacity of the stratified tank.

The means for absorbing the solar thermal energy, which is connected to the thermal storage system, is not limited to the solar field 200 shown above. Therefore, any means can be used, as far as that is capable of absorbing the solar thermal energy into the heat transfer medium.

The operation of the thermal storage system is controlled by the CPU, as described above, based on the predetermined program stored in advance. Here, duration of absorbing time may be set to vary depending on the time of the year, for example, so as the heat transfer medium to absorb the solar thermal energy for a long time during periods when the sunlight is strong, such as in summer, while to absorb the solar thermal energy for a short time during periods when the sunlight is weak, such as in winter. Furthermore, any means can be used for detecting variations in the solar thermal energy, such as a sunshine sensor.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### Legend for Reference Numerals

- 1, 2, 3, 4, 5: Thermal storage system

- 100, 400, 500: Power generation system (Integrated solar combined cycle power generation system, Solar power generation system, Binary power generation system)
- 10a, 10b, 10c, 10d: Stratified tank (First thermal storage tank)
- 10a6: Phase-change material
- 15: Stratified tank (Second thermal storage tank)

## Claims

1. A thermal storage system for storing solar thermal energy, comprising:
heat transfer medium that absorbs solar thermal energy;
phase-change material (10a6) that is heat exchanged with the heat
transfer medium; and
a plurality of first thermal storage tanks (10a-10d) in which the phase-change material (10a6) is supported and through which the heat transfer medium flows,
wherein the plurality of first thermal storage tanks (10a-10d) are connected in parallel for the heat transfer medium flowing through, when storing the solar thermal energy, while the plurality of first thermal storage tanks (10a-10d) are connected in series for the heat transfer medium flowing through, when exploiting the stored solar thermal energy.

2. The thermal storage system according to claim 1,
wherein the thermal storage system further comprises:
a second thermal storage tank (15) that stores the heat transfer medium
which has absorbed the solar thermal energy.

3. The thermal storage system according to claim 2,
wherein, the second thermal storage tank (15) is connected in parallel to the plurality of first thermal storage tanks (10a-10d), and the heat transfer medium flows through the second thermal storage tank (15).

4. The thermal storage system according to at least one of claims 1 to 3,
wherein the heat transfer medium is circulated through the plurality of first thermal storage tanks (10a-10d).

5. The thermal storage system according to at least one of claims 1 to 4,
wherein the number of the plurality of first thermal storage tanks (10a-10d) is 2ⁿ (where n is an integer of 1 or more).

6. The thermal storage system according to at least one of claims 1 to 5,
wherein the phase-change material (10a6) is coated, and the coated phase-change material (10a6) is contained in the plurality of first thermal storage tanks (10a-10d).

7. A power generation system comprising the thermal storage system according to at least one of claims 1 to 6.

8. The power generation system according to claim 7,
wherein the power generation system is one of an integrated solar combined cycle power generation system, a solar power generation system, and a binary power generation system.

9. The power generation system according to claim 7 or 8,
wherein medium in a liquid state is heated with the solar thermal energy absorbed by the heat transfer medium, and power generation is performed by using generated vapor of the medium.
